**Europäisches Patentamt**

**European Patent Office**

**Office européen des brevets**

(19)

(11) Veröffentlichungsnummer: **0 204 228**
**B1**

(12)

# EUROPÄISCHE PATENTSCHRIFT

(45) Veröffentlichungstag der Patentschrift:
**13.07.88**

(21) Anmeldenummer: **86107037.3**

(22) Anmeldetag: **23.05.86**

(51) Int. Cl.⁴: **B 62 B 1/12**

(54) **Transport-Handwagen.**

(30) Priorität: **04.06.85 DE 3519960**

(43) Veröffentlichungstag der Anmeldung:
**10.12.86 Patentblatt 86/50**

(45) Bekanntmachung des Hinweises auf die Patenterteilung:
**13.07.88 Patentblatt 88/28**

(84) Benannte Vertragsstaaten:
**AT BE CH DE FR GB IT LI LU NL SE**

(56) Entgegenhaltungen:
**WO - A - 84/01334**
**DE - C - 433 912**
**GB - A - 1 058 591**
**US - A - 1 244 506**
**US - A - 4 087 102**
**US - A - 4 274 644**

(73) Patentinhaber: **Abel, Helmut, 74, Bd. d'Italie, Monte Carlo (MC)**

(72) Erfinder: **Abel, Helmut, 74, Bd. d'Italie, Monte Carlo (MC)**

(74) Vertreter: **Patentanwälte Dipl.-Ing. Klaus Westphal Dr. rer. nat. Bernd Mussgnug Dr. rer.nat. Otto Buchner, Waldstrasse 33, D-7730 VS-Villingen (DE)**

## Beschreibung

Die Erfindung betrifft einen Transport-Handwagen nach dem Oberbegriff des Anspruchs 1.

Herkömmliche Transport-Handwagen (auch Sackkarren und ähnliche) haben alle, selbst wenn sie teilweise zusammenfaltbar oder -klappbar sind, den grossen Nachteil, dass ihre grossen oder auch kleinen Räder derart vorstehen, dass die Lagerung oder das Mitnehmen solcher Transportmittel, beispielsweise im Autokofferraum, in der Bahn oder im Flugzeug, stets sehr problematisch ist. Das Transportmittel mit seinen hinderlichen, meist weit vorstehenden Rädern nimmt nämlich nicht nur relativ viel Platz in Anspruch, sondern führt oft auch zu Beschädigungen anderer benachbarter Güter, da die vorstehenden Räder in diese eindringen können. Transportwagen oder sonstige Transportmittel mit sehr kleinen Rädern können zwar die genannten Nachteile geringer werden lassen, jedoch stellen kleine Räder auch keine befriedigende Lösung dar, weil diese viele Hindernisse, wie Rinnen, Tepichränder, Matten, Bordsteinkanten, steinigen Untergrund, Türschwellen, weichen Erduntergrund etc. nicht problemlos überwinden. Auch Klapp-Räder, deren Rad-Aufhängungselement oder Rad-Tragelement über Drehgelenke ein Umklappen der Räder um 90° ermöglicht, haben sich, besonders bei hoher Belastung, entweder als ungeeignet oder für den Zweck als technisch und preislich zu aufwendig erwiesen. Erstens nämlich führt das natürliche Lagerspiel in den Drehgelenken des Umklappmechanismus zum „Flattern" der Räder, da diese keine Seitenstabilität haben, und zweitens kann man die oft hochbelasteten Räder nach ihrem Aufrichten nur durch besondere, vollkommen spiel- und abnutzungsfreie und daher relativ aufwendige Feststellmechanismen einigermassen befriedigend blockieren. Auch der Umklappmechanismus als solcher ist technisch aufwendig und ausserdem benötigt er einen gewissen Raum für seine Unterbringung.

Aus der GB-A-1 058 591 ist bereits ein Transport-Handwagen nach dem Oberbegriff des Anspruchs 1 bekannt. Bei dem bekannten Handwagen kann der Transportkörper in der Mitte abgeklappt und zu einem flachen Kasten zusammengeklappt werden. Die Rad-Tragelemente weisen jeweils Drehangeln auf, die in entsprechende Vertiefungen an der Unterseite des Transportkörpers lose einsetzbar sind. Diese Art der Lagerung ist nicht nur sehr verschleissanfällig, sondern es kann dabei auch nicht sicher verhindert werden, dass während des Transports eine Drehangel aus der zugehörigen Bohrung herausfällt. Da überdies die einklappbare Deichsel und die Räder samt Rad-Tragelementen sich im zusammengeklappten Zustand des kastenförmigen Transportkörpers vollständig im Inneren desselben befinden müssen, kann dieser eine bestimmte Dicke nicht unterschreiten. Ausserdem ist das mit dem Auf- und Zuklappen des kastenförmigen Transportkörpers verbundene Aufstellen und Zusammenlegen des Handwagens verhältnismässig kompliziert. Die zusammenklappbare Deichsel ist ferner durch ein ebenfalls verschleissanfälliges, sehr stabiles Scharnier mit dem Rand des Transportkörpers verbunden.

Durch die Erfindung soll ein Transport-Handwagen der eingangs genannten Art so verbessert werden, dass bei möglichst flacher Ausbildung des Transportkörpers Aufbau und Abbau des Handwagens schnell und einfach durchgeführt werden können, wobei sich durch eine geeignete Verankerung der Rad-Tragelemente und der Deichsel am Transportkörper eine völlig spielfreie und auch bei grösserer Belastung seitenstabile Verbindung zwischen diesen Teilen ergibt.

Diese Aufgabe wird erfindungsgemäss durch die Merkmale des Anspruchs 1 gelöst.

In zusammengelegter Form kann die erfindungsgemässe Transportscheibe fast wie eine flache Aktentasche getragen werden und infolge ihrer geringen Dicke und ihres extrem raumsparenden Volumens überall, vor allem auch im Kofferraum von Personenkraftwagen, völlig problemlos flach gelagert werden. Sie kann auch an jeder Wand raumsparend aufgehängt oder angelehnt werden. Die Dicke der Transportscheibe mit eingelegten Rädern, Rad-Tragelementen und Deichsel beträgt insgesamt nur etwa 20-30 mm. Die Räder können einen ziemlich grossen Durchmesser aufweisen und sogar relativ breit sein, was durch die Tiefe der Ausnehmungen ausgeglichen werden kann.

Die Unteransprüche beziehen sich auf vorteilhafte Ausgestaltungen des Erfindungsgedankens, wobei die keilförmige oder konische Ausbildung von Zähnen und Aufnahmeschlitzen gemäss Anspruch 2, die Einsteckmöglichkeit des Randes eines Tragelementes gemäss Anspruch 3 und die federnden Halteeinrichtungen gemäss Anspruch 4 Vorteile bezüglich der Bedienungsfreundlichkeit und Stabilität der Verbindung ergeben. Trotz dieser Stabilität kann durch einen einzigen Griff oder Schlag auf die Rad-Tragelemente bzw. die Deichsel die hergestellte und stark belastbare Verbindung wieder gelöst werden.

Besonders schlank und leicht bedienbar ist die Ausführungsform gemäss Anspruch 5, bei der Rad-Tragelemente und Deichsel einfach in einseitig offene Ausnehmungen der Transportscheibe, bündig mit der Aussenfläche derselben, eingelegt werden können. Eine besonders schlanke Ausführung ergibt sich, wenn gemäss Anspruch 6 die Räder an den flachen Rad-Tragelementen eng anliegend und einseitig zapfengelagert werden. Wenn man gemäss Anspruch 7 die die Rad-Tragelemente aufnehmenden Ausnehmungen so zu einem Rand der Transportscheibe hin versetzt, dass die eingelegten Räder wenigstens teilweise über den Rand hinausragen, kann der extrem schlanke Transport-Handwagen auch in zusammengelegtem Zustand auf den leicht vorstehenden Rädern verfahren und somit leichter befördert werden.

Anhand der Figuren werden Ausführungsbeispiele der Erfindung näher erläutert. Es zeigt:

Fig. 1 eine Seitenansicht des Transport-Handwagens mit seinen Teilen, wie Transportscheibe 1, Laufrad 2, Stützrad 3, Rad-Tragelement 4 und Deichsel 5;

Fig. 2 den Transport-Handwagen von unten gesehen, wobei in der unteren Hälfte der Abbildung das Rad-Tragelement 4 mit seinen Rädern 2 und 3 und die Deichsel 5 in die zur Aufnahme dienenden Ausnehmungen 6, 9 der Transportscheibe 1 hineingelegt abgebildet ist;

Fig. 2a eine der Fig. 2 entsprechende Teilansicht mit zu dem Rand der Transportscheibe 1 hin versetzten Ausnehmungen 6';

Fig. 3 eine teilweise geschnittene Vorderteilansicht des Transport-Handwagens mit einem der eingesteckten Rad-Tragelemente 4 und zugehörigem, einseitig gelagertem Rad 2 und der Transportscheibe 1, bei welchem zum besseren Verständnis das genannte Rad-Tragelement 4 mit dem Rad 2 auch in die Ausnehmung 6 eingelegt dargestellt ist;

Fig. 4 deutlicher, in teilweise geschnittener Vorderteilansicht, die Transportscheibe 1 mit dem eingesteckten Rad-Tragelement 4 und einer Halteeinrichtung 13;

Fig. 5 in der Fig. 4 entsprechender Ansicht die Transportscheibe 1 mit einer ersten Variante 14, 15 der Steckverbindung;

Fig. 6 in der Fig. 5 entsprechender Ansicht die Transportscheibe 1 mit einer zweiten Variante 14, 16 der Steckverbindung;

Fig. 7 in der Fig. 4 entsprechender Ansicht die Transportscheibe 1 mit einer dritten Variante 17 der Steckverbindung;

Fig. 8 in der Fig. 4 entsprechender Ansicht die Transportscheibe 1 mit einer vierten Variante 19 der Steckverbindung, und

Fig. 9 eine Teilseitenansicht der in Fig. 8 gezeigten Anordnung.

Im folgenden wird die Erfindung in ihren Einzelheiten beschrieben:

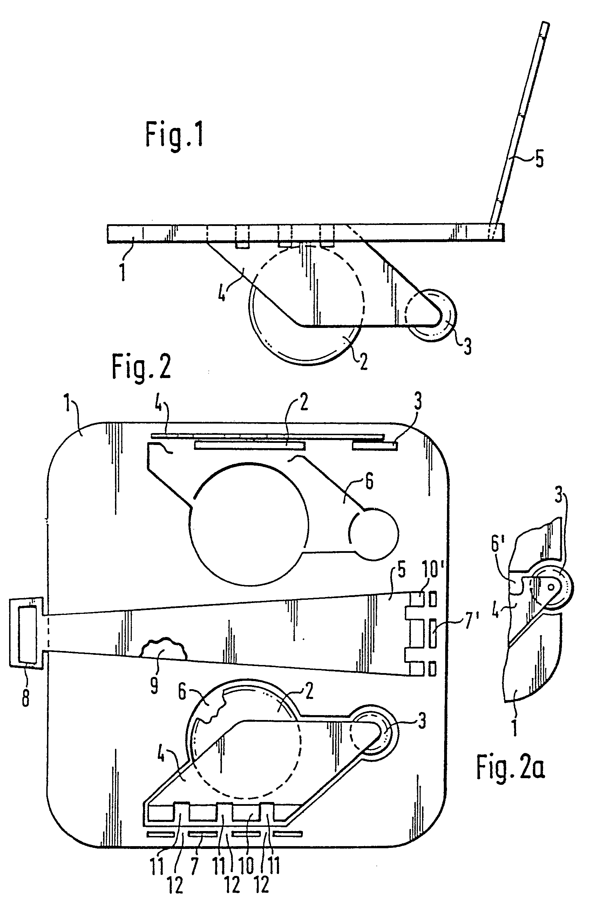

Das äusserst flache, beispielsweise nur 3 mm dicke Rad-Tragelement 4 — siehe Fig. 1 und 2 oben — trägt jeweils ein grosses Laufrad 2 und in gewissem Abstand nach hinten ein kleineres Stützrad 3, welches bei horizontaler Lage der Transportscheibe 1, d. h. bei normaler Fahrt, den Boden nicht berührt. Wird die mit einem Riffelgummi-Belag versehene Transportscheibe 1 beladen, befindet sie sich in leichter Schräglage, wobei die beiden Stützräder 3 den Boden berühren. Nach dem Beladevorgang wird die Transportscheibe 1 über die starre Deichsel 5 in ungefähre Horizontallage gebracht und an das Ziel geschoben. Auch kann die Transportscheibe 1 in Schräglage, d. h. wenn auch die beiden Stützräder 3 den Boden berühren, über lange Strecken verfahren werden, wobei sie bei Richtungswechsel mittels der starren Deichsel 5 zunächst leicht angehoben wird — die beiden Stützräder 3 heben sich dann vom Boden ab—, um dann in die neue Richtung gedreht und anschliessend auf den vier Rädern 2, 3 wieder weiter geschoben zu werden.

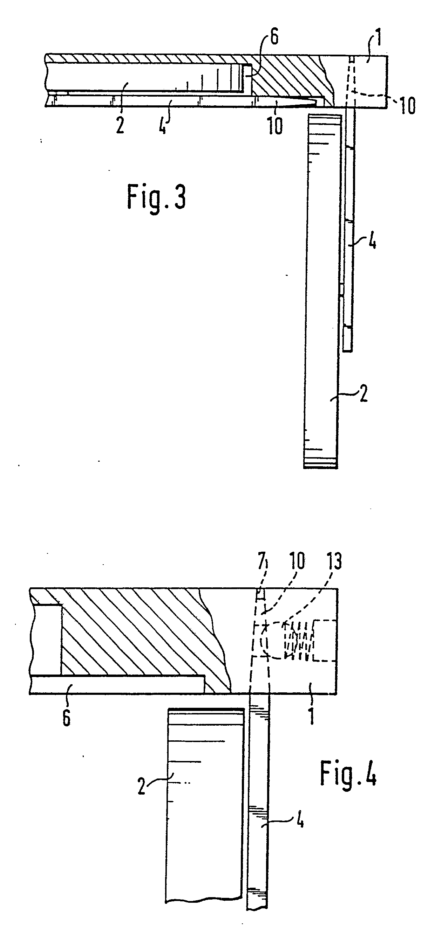

Das flache Rad-Tragelement 4 mit seinen beiden Rädern 2 und 3 ist an seinem oberen Rand keilförmig ausgebildet (10, Fig. 3; 10, Fig. 4) und ausserdem mit mehreren Einziehungen oder Ausnehmungen 11 (Fig. 2 unten) versehen, wodurch mehrere keilförmige Zähne 10 (Fig. 2 unten) — im vorliegenden Fall vier — entstehen.

Das flache Rad-Tragelement 4 wird mit seinen keilförmigen Zähnen 10 (Fig. 2) in diesen Zähnen genau entsprechende keilförmige, nach oben offene oder auch geschlossene Aufnahmeöffnungen oder Aufnahmeschlitze 7 (Fig. 2) der Transportscheibe 1 eingesteckt und durch eine oder mehrere Druckkugeln 13 (Fig. 4) festgehalten. Durch dieses Steck-Befestigungsprinzip entsteht zwischen dem flachen Rad-Tragelement 4 und der Transportscheibe 1 augenblicklich eine vollkommen spielfreie, einfache, abnutzungsunempfindliche und besonders hochbelastbare Steckverbindung, die sogar mit grösser werdender Belastung der Transportscheibe noch intensiver wird, da dann nämlich die keilförmigen Zähne noch tiefer in ihre entsprechenden keilförmigen Aufnahmeschlitze wandern.

Die Ausnehmungen 11 (Fig. 2) am oberen Rand des Rad-Tragelementes 4 ermöglichen die Bildung von Materialbrücken 12 (Fig. 2) im Werkstoff der Transportscheibe 1 und damit die Entstehung von mehreren voneinander getrennten Aufnahmeschlitzen 7 (Fig. 2) anstatt eines einzigen durchgehenden Aufnahmeschlitzes. Ein einziger durchgehender Aufnahmeschlitz an den Kanten der Transportscheibe 1 hätte nämlich, besonders bei seitlicher Schockeinwirkung auf die relativ hohen Räder 2, den Nachteil, sich aufzuweiten oder sogar auseinanderzubrechen.

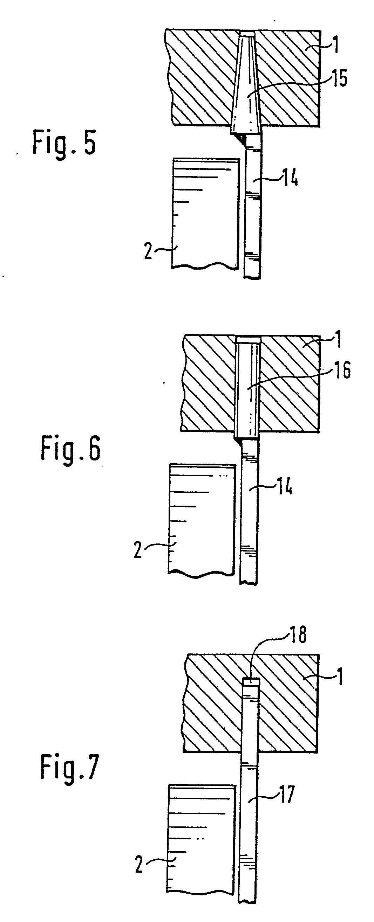

Im Falle einer nur leicht belastbaren Billigausführung einer solchen Transportscheibe (Fig. 7) kann die Transportscheibe 1 auch einen durchgehenden U-förmigen, parallelflächigen Aufnahmeschlitz 18 oder auch einen nach oben offenen, parallelflächigen Aufnahmeschlitz aufweisen, wobei der obere Rand des flachen Rad-Tragelementes 17 entsprechend ebenfalls parallelflächig ist.

Fig. 5 und 6 zeigen Varianten der Steckverbindung zwischen einem Rad-Tragelement 14 und der Transportscheibe 1. In diesen Varianten besitzt das Rad-Tragelement 14 an seinem oberen Rand mehrere konische Zapfen (15, Fig. 5) oder auch zylindrische Zapfen (16, Fig. 6), die spielfrei in entsprechende konische bzw. zylindrische Aufnahmeöffnungen der Transportscheibe 1 passen.

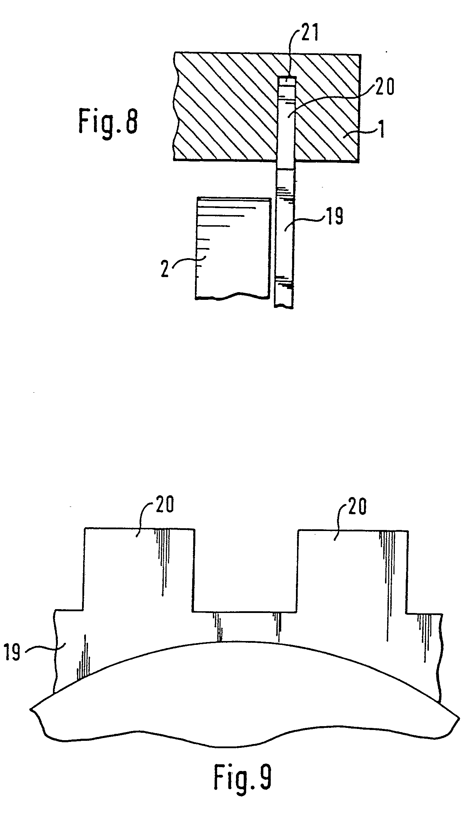

Fig. 8 und 9 zeigen eine weitere Variante der Steckverbindung zwischen zinnenförmigen Zähnen 20 eines Rad-Tragelementes 19 und der Transportscheibe 1.

Die beschriebene Steckverbindung mit ihren Varianten kann natürlich auch für Rad-Tragelemente, die nur ein Rad oder auch mehr als zwei Räder tragen, in Frage kommen. Auch kann sie Anwendung finden für grössere und schwerere, mit Hand- oder Maschinenkraft fortbewegte Transportwagen, auch für solche mit einer Schwenkdeichsel und drehbeweglichen Lenk-Vorder- oder Lenk-Hinterwagen.

Die Steckverbindung zwischen der Deichsel 5 (Fig. 2), die hier in ihrem Aufnahmehohlraum 9 liegend abgebildet ist, und der Transportscheibe 1 besteht ebenfalls aus keilförmigen Befestigungszähnen 10' und keilförmigen Aufnahmeschlitzen 7'. Allerdings wird die Deichsel 5 in die Oberseite der Transportscheibe 1 eingesteckt. Mittels durchgebrochenem Griff 8 (Fig. 2) kann die Transportscheibe im zusammengebauten Zustand bequem von Hand, wie eine flache Aktentasche, getragen werden.

Fig. 2a zeigt eines der Rad-Tragelemente 4 in seinem Aufnahmehohlraum 6' eingelegt, welcher derart zu dem Rand der Transportscheibe 1 hin versetzt ist, dass das Stützrad 3 über diesen Rand herausragt. Auf diese Weise kann der Transport-Handwagen auch in zusammengelegtem Zustand, vertikal aufgerichtet und am Griff 8 der Deichsel 5 geführt, auf den beiden Stützrädern 3 verfahren werden, d. h. man braucht den Transport-Handwagen nicht unbedingt von Hand zu tragen.

Es sei noch erwähnt, dass die Ausnehmungen 6, 9 nicht unbedingt in der Unterseite der Transportscheibe 1 liegen müssen, sondern dass diese sich auch in der Oberseite der Transportscheibe befinden könnten.

Aus der zusammengelegten Anordnung der Transportscheibe gemäss Fig. 2 kann die betriebsbereite Stellung gemäss Fig. 1 mit wenigen Handgriffen hergestellt werden, indem die Rad-Tragelemente aus den Ausnehmungen 6 herausgenommen und die Zähne 10 in die Aufnahmeschlitze 7 an beiden Seiten der Transportscheibe 1 von unten her eingesteckt werden. Anschliessend wird die Deichsel 5 aus der Ausnehmung 10 herausgenommen und mit den Zähnen 10' von oben her in die Aufnahmeschlitze 7' der Transportscheibe 1 eingesteckt. Durch diese wenigen Handgriffe ist der Transport-Handwagen bereits voll betriebsfähig. Nach Beendigung des Transports können die Teile in der umgekehrten Reihenfolge wieder in die Ausnehmungen 6, 9 eingelegt und die äusserst raumsparende flache Anordnung gemäss Fig. 2 wiederhergestellt werden.

## Patentansprüche

1. Transport-Handwagen mit einem eine Transportfläche bildenden Transport-Körper (1) und mindestens je einem Rad (2, 3) auf beiden Seiten des Transport-Körpers, wobei die Räder jeweils über ein flaches Rad-Tragelement (4, 14, 17, 19) mit dem Transport-Körper (1) verbunden sind, die Räder (2, 3) mit den Rad-Tragelementen (4, 14, 17, 19) vom Transport-Körper (1) abnehmbar sind und parallel zu diesem angeordnet werden können, der Transport-Körper als flache, ebene Transportscheibe (1) ausgebildet ist, die Rad-Tragelemente (4, 14, 17, 19) mittels je einer lösbaren Steckverbindung (7, 10; 7', 10'; 15, 16; 17, 18; 20, 21) mit der Transportscheibe (1) verbunden sind und mit den Rädern (2, 3) in je eine Ausnehmung (6, 9) der Transportscheibe (1) parallel zu dieser einlegbar sind und wobei Rad-Tragelemente (4, 14, 17, 19) und Deichsel (5) in den Ausnehmungen (6, 9) gehaltert sind, dadurch gekennzeichnet, dass auch die Deichsel (5) von der Transportscheibe (1) abnehmbar und mittels einer lösbaren Steckverbindung (7', 10'; 15, 16; 17, 18; 20, 21) mit der Transportscheibe (1) verbunden ist, und dass die Rad-Tragelemente (4, 14, 19) und die Deichsel (5) an einer Kante vorstehende Zähne (10, 10', 15, 16, 20) aufweisen, wobei die Zähne (10, 15, 16, 20) der Rad-Tragelemente (4, 14, 19) von unten und die Zähne (10') der Deichsel (5) von oben in entsprechende Aufnahmeöffnungen bzw. Aufnahmeschlitze (7, 7', 18, 21) der Transportscheibe (1) einsteckbar sind.

2. Transport-Handwagen nach Anspruch 1, dadurch gekennzeichnet, dass Zähne (10, 10', 15) und Aufnahmeöffnungen (7, 7') keilförmig oder konisch ausgebildet sind.

3. Transport-Handwagen nach Anspruch 1 oder 2, dadurch gekennzeichnet, dass ein Rand jedes Rad-Tragelementes (17) von unten in einen entsprechenden Aufnahmeschlitz (18) der Transportscheibe (1) einsteckbar ist.

4. Transport-Handwagen nach einem der vorangehenden Ansprüche, dadurch gekennzeichnet, dass die eingesteckten Zähne (10, 10', 15, 16, 20) bzw. Ränder in den Aufnahmeschlitzen (7, 7', 18, 21) durch federbetätigte, selbsttätig einschnappende Halteeinrichtungen (13) gegen Herausfallen gehalten sind.

5. Transport-Handwagen nach einem der vorangehenden Ansprüche, dadurch gekennzeichnet, dass Rad-Tragelemente (4, 14, 17, 19) und Deichsel (5) in der in die Ausnehmungen (6, 9) eingelegten Lage bündig mit der Aussenfläche der Transportscheibe (1) liegen.

6. Transport-Handwagen nach einem der vorangehenden Ansprüche, dadurch gekennzeichnet, dass an jedem Rad-Tragelement (4, 14, 17, 19) mindestens ein Rad (2, 3) eng anliegend und einseitig zapfengelagert ist.

7. Transport-Handwagen nach einem der vorangehenden Ansprüche, dadurch gekennzeichnet, dass die Ausnehmungen (6) für die Rad-Tragelemente (4, 14, 17, 19) derart zu einem Rand der Transportscheibe (1) hin versetzt sind, dass wenigstens je ein Rad (2, 3) jedes Rad-Tragelementes in zusammengelegtem Zustand über diesen Rand herausragt und somit der Transport-Handwagen auch in zusammengelegtem Zustand, vertikal aufgerichtet und an der Deichsel (5, 8) geführt, auf Rädern (2, 3) verfahren werden kann.

## Claims

1. Transporting hand cart with a transporting body (1) forming a transporting surface and at least one wheel (2, 3) on each of the two sides of the transporting body, whereby the wheels are always connected to the transporting body (1) by means of a flat wheel-carrying element (4, 14, 17, 19), the wheels (2, 3) together with the wheel-carrying elements (4, 14, 17, 19) can be removed from the transporting body (1) and can be arranged parallel to this, the transporting body is built as a flat, level transporting plate (1), the wheel-carrying elements (4, 14, 17, 19) are each connected to the transporting plate (1) with a releasable insertion connection (7, 10; 7', 10'; 15, 16; 17, 18; 20, 21), and, together with the wheels (2, 3), can each be laid in a recess (6, 9) of the transporting plate (1), parallel to this, and whereby the wheel-carrying elements (4, 14, 17, 19) and shaft (5) are fastened in the recesses (6, 9), characterized in that the shaft (5) is also removable from the transporting plate (1) and is connected with the transporting plate (1) by means of a releasable insertion connection (7', 10'; 15, 16; 17, 18; 20, 21), and in that the wheel-carrying elements (4, 14, 19) and the shaft (5) have projecting teeth (10, 10', 15, 16, 20) on one edge, whereby the teeth (10, 15, 16, 20) of the wheel-carrying elements (4, 14, 19) and the teeth (10') of the shaft (5) can be inserted from below and above respectively in the corresponding receiving openings or receiving slots (7, 7', 18, 21) of the transporting plate (1).

2. Transporting hand cart according to Claim 1, characterized in that the teeth (10, 10', 15) and receiving openings (7, 7') are wedge-shaped or conical.

3. Transporting hand cart according to Claim 1 or 2, characterized in that one edge of each wheel-carrying element (17) can be inserted from below into a corresponding receiving slot (18) of the transporting plate (1).

4. Transporting hand cart according to any one of the preceding Claims, characterized in that the inserted teeth (10, 10', 15, 16, 20) or edges are held in the receiving slots (7, 7', 18, 21) by spring operated, self acting holding devices (13) which snap fasten.

5. Transporting hand cart according to any one of the preceding Claims, characterized in that the wheel-carrying elements (4, 14, 17, 19) and shaft (5), in the configuration when they are laid in the recesses (6, 9), lie flush with the external surface of the transporting plate (1).

6. Transporting hand cart according to any one of the preceding Claims, characterized in that on each wheel-carrying element (4, 14, 17, 19) at least one wheel (2, 3) is fastened in a socket on one side and lies close to it.

7. Transporting hand cart according to any one of the preceding Claims, characterized in that the recesses (6) for the wheel-carrying elements (4, 14, 17, 19) are displaced towards an edge of the transporting plate (1) in such a way that, in the folded together state, at least one wheel (2, 3) of each wheel-carrying element projects beyond this edge and therefore the transporting hand cart can also when folded together be brought into the vertical position and, steered by the shaft (5, 8), can be moved on wheels (2, 3).

**Revendications**

1. Chariot transporteur à bras avec un corps de transport (1) formant une surface de transport et avec au moins une roue (2, 3) de chaque côté du corps de transport, les roues étant respectivement reliées au corps de transport (1) par l'intermédiaire d'un élément de support de roues plat (4, 14, 17, 19), les roues (2, 3) pouvant être retirées, avec les éléments de support de roues (4, 14, 17, 19), du corps de transport (1) et disposées parallèlement à celui-ci, le corps de transport étant conformé en plateau de transport (1) plat et plan, les éléments de support de roues (4, 14, 17, 19) pouvant être respectivement rattachés au plateau de transport (1) au moyen d'un assemblage par emboîtement amovible (7, 10; 7', 10'; 15, 16; 17, 18; 20, 21) et placés, conjointement avec les roues (2, 3), dans respectivement un évidement (6, 9) du plateau de transport (1) et parallèlement à celui-ci, et les éléments de support de roues (4, 14, 17, 19) et le timon (5) étant maintenus dans les évidements (6, 9), caractérisé en ce que le timon (5) peut, lui aussi, être retiré du plateau de transport (1) et rattaché audit plateau de transport (1) au moyen d'un assemblage par emboîtement amovible (7', 10'; 15, 16; 17, 18; 20, 21), et que les éléments de support de roues (4, 14, 19) et le timon (5) présentent sur l'un des bords des dents en saillie (10, 10', 15, 16, 20), les dents (10, 15, 16, 20) des éléments de support de roues (4, 14, 19) pouvant être introduites par le bas et les dents (10') du timon (5) pouvant être introduites par le haut dans des ouvertures et respectivement des fentes de réception (7, 7', 18, 21) correspondantes du plateau de transport (1).

2. Chariot transporteur à bras selon la revendication 1, caractérisé en ce que les dents (10, 10', 15) et les ouvertures de réception (7, 7') sont conformées en coin ou en cône.

3. Chariot transporteur à bras selon l'une des revendications 1 ou 2, caractérisé en ce qu'un bord de chaque élément de support de roues (17) peut être introduit par le bas dans une fente de réception (18) conjuguée du plateau de transport (1).

4. Chariot transporteur à bras selon l'une quelconque des revendications 1 à 3, caractérisé en ce que les dents (10, 10', 15, 16, 20) et respectivement les bords engagés sont maintenus dans les fentes de réception (7, 7', 18, 21) par des dispositifs de blocage (13) commandés par ressort et à encliquetage automatique qui empêchent leur dégagement.

5. Chariot transporteur à bras selon l'une quelconque des revendications 1 à 4, caractérisé en ce que, dans la position repliée dans les évidements (6, 9), les éléments de support de roues (4, 14, 17, 19) et le timon (5) sont alignés avec la surface extérieure du plateau de transport (1).

6. Chariot transporteur à bras selon l'une quelconque des revendications 1 à 5, caractérisé en ce que sur chaque élément de support de roues (4, 14, 17, 19) au moins une roue (2, 3) est montée de manière collée sur un pivot unilatéral.

7. Chariot transporteur à bras selon l'une quelconque des revendications 1 à 6, caractérisé en ce que les évidements (6) pour les éléments de support de roues (4, 14, 17, 19) sont déportés vers un bord du plateau de transport (1) de telle façon qu'au moins une roue (2, 3) de chaque élément de support de roues dépasse de ce bord à l'état replié et que le chariot transporteur à bras peut également être déplacé à l'état replié, dans la position verticale et guidé par le timon (5, 8), sur les roues (2, 3).

Fig.1

1

5

4

2

3

Fig.2

1    4    2    3

6

8    5    10'

9    7'

6    2    6'

4

3    3

11  7  11  10  11

12    12  12

1

Fig.2a

Fig. 3

Fig. 4

Fig.5

Fig.6

Fig.7

Fig.8

Fig.9